# DEMANDE DE BREVET EUROPEEN

(11) **EP 2 276 227 A1**
(43) Date de publication de la demande: **19.01.2011**
(21) Numéro de dépôt: 09305682.8
(22) Date de dépôt: 17.07.2009
(51) Int. Cl.: H04M 3/493

(54) **Dispositif et procédé de traitement de données de communications d'usager(s) pour communiquer rapidement avec des contacts**

(71) Demandeur: Alcatel Lucent, 75008 Paris (FR)
(72) Inventeur: Dantec, Fabrice, 29228 Brest (FR); Souben, Michel, 29228 Brest (FR); Chaptal, Pierre, 29228 Brest (FR)
(74) Mandataire: Hedarchet, Stéphane

(57) **Abrégé**

Un dispositif (D) est dédié au traitement de données relatives à des communications concernant au moins un usager. Ce dispositif (D) comprend i) des moyens d'analyse (MA) chargés d'analyser des données relatives à des communications entrantes et/ou sortantes d'au moins un terminal de communication (T) d'un usager afin de déterminer des informations choisies relatives à ces communications et à chaque autre usager, dit « contact », concerné par l'une au moins de ces communications, et ii) des moyens de traitement (MT) chargés d'attribuer un poids à chaque communication concernant l'usager en fonction des informations déterminées pour cette communication et d'au moins une règle choisie, puis de constituer un fichier de données de contacts dans lequel chaque contact est associé à un poids global égal à la somme des poids attribués à chaque communication qui le concerne et qui concerne en même temps l'usager.

## Description

L'invention concerne les communications entre usagers de terminaux de communication, et plus précisément les dispositifs et procédés qui sont mis à la disposition de ces usagers pour réduire le temps qui est nécessaire à l'établissement d'une communication avec au moins un contact.

On notera que l'invention concerne tout type de terminal de communication, qu'il soit filaire ou non filaire.

Par ailleurs, on entend ici par « contact » un usager d'au moins un terminal de communication (associé à un identifiant de communication, comme par exemple un numéro de téléphone ou une adresse de messagerie électronique (ou « adresse e-mail ») ou encore une adresse Internet) qui a éventuellement (et de préférence) déjà été en communication avec un autre usager, et qui fait éventuellement partie d'un répertoire de ce dernier, personnel et/ou professionnel. On notera qu'un contact peut être connu par un nom, un pseudonyme, un numéro ou un identifiant de communication.

En outre, on entend ici par « communication » tout type de liaison établie entre un terminal (de communication) d'un usager appelant et au moins un terminal (de communication) d'un usager appelé. Par conséquent, il pourra par exemple s'agir d'un appel téléphonique classique, éventuellement via l'Internet, d'un envoi de message de type court (SMS ou MMS), d'un envoi de message de type instantané (ou « chat » ou encore IM), d'un envoi de message électronique (ou courriel)), ou d'un envoi de message vidéo.

Comme le sait l'homme de l'art, plusieurs solutions ont été proposées pour réduire le temps qui est nécessaire à l'établissement d'une communication entre un usager d'un terminal et au moins l'un de ses contacts. Ainsi, un usager ou un administrateur de réseau peut associer un identifiant de communication à une touche d'un terminal (« raccourci »). Il est également possible de constituer une liste de contacts (ou « redial list ») comportant les N derniers contacts avec lesquels un usager a établi une communication entrante ou sortante, éventuellement ordonnée de façon chronologique. Il est également possible de constituer une liste (ou « call lag ») comportant tous les identifiants de communication des terminaux qui ont établi une communication entrante ou sortante avec un usager, éventuellement en correspondance du nombre de communications établies avec chaque contact. Il est également possible de constituer une liste restreinte d'amis ou de relations (ou « buddy list ») comportant les identifiants de communication de terminaux d'amis ou de relations, éventuellement dans le cadre d'une application spécifique (par exemple de type messagerie instantanée (ou IM)). Il est également possible de constituer un répertoire personnel et/ou professionnel (ou d'entreprise), éventuellement accessible via un serveur.

Toutes les solutions présentées ci-avant permettent à des usagers de communiquer plus rapidement avec certains autres usagers. Cependant, soit elles n'offrent qu'une simple liste (éventuellement limitée) dans laquelle la recherche d'un contact peut s'avérer relativement longue, soit elles requièrent une adaptation personnalisée par chaque usager en fonction de ses critères de recherche.

Aucune solution connue n'apportant une entière satisfaction, l'invention a donc pour but d'améliorer la situation.

Elle propose à cet effet un dispositif, dédié au traitement de données relatives à des communications concernant au moins un usager, et comprenant :
- des moyens d'analyse chargés d'analyser des données relatives à des communications entrantes et/ou sortantes d'au moins un terminal de communication d'un usager afin de déterminer des informations choisies relatives à ces communications et à chaque autre usager, dit « contact », concerné par l'une au moins de ces communications, et
- des moyens de traitement chargés d'attribuer un poids à chaque communication concernant l'usager en fonction des informations déterminées pour cette communication et d'au moins une règle choisie, puis de constituer un fichier de données de contacts dans lequel chaque contact est associé à un poids global qui est égal à la somme des poids attribués à chaque communication qui le concerne et qui concerne en même temps l'usager.

Le dispositif selon l'invention peut comporter d'autres caractéristiques qui peuvent être prises séparément ou en combinaison, et notamment :
- ses moyens de traitement peuvent être chargés d'attribuer les poids en fonction d'au moins une règle qui est choisie dans un groupe comprenant au moins la date de la communication, le statut de réponse à la communication, la direction de la communication (« entrante » ou « sortante »), l'appartenance du contact à un répertoire de l'usager et le nombre de communications entre un contact et l'usager ;
- ses moyens d'analyse peuvent être chargés d'analyser selon une période choisie les données relatives à des communications entrantes et/ou sortantes, de sorte que les moyens de traitement puissent mettre à jour le fichier de données de contacts d'un usager selon cette période choisie ;
- ses moyens de traitement peuvent être chargés de mettre à jour dynamiquement un fichier de données de contacts en fonction des communications entrantes et/ou sortantes ;
- ses moyens de traitement peuvent être chargés de constituer des fichiers de données de contacts agencés sous la forme de listes de contacts qui sont ordonnés en fonction de leurs poids globaux associés ;
- dans une variante, ses moyens de traitement peuvent être chargés de constituer des fichiers de données de contacts qui sont agencés sous la forme de nuages de contacts dans lesquels les contacts d'un usager sont positionnés dans une zone de forme choisie en fonction de leurs poids globaux associés et d'un ordre alphabétique et/ou de l'ancienneté de leur dernière communication avec l'usager et/ou du statut de réponse de leur dernière communication avec l'usager et/ou de la direction de leur dernière communication avec l'usager. Ce mode de présentation à un usager peut par exemple être une transposition dans le domaine des télécommunications d'une application Web 2.0 appelée nuage de mots clés.

L'invention propose également un équipement de réseau, propre à être connecté à un réseau de communication auquel peuvent se connecter des terminaux de communication d'usagers, et équipé d'un dispositif de traitement du type de celui présenté ci-avant.

L'invention propose également un terminal de communication d'usager, propre à être connecté à un réseau de communication, et équipé d'un dispositif de traitement du type de celui présenté ci-avant.

L'invention propose également un procédé, dédié au traitement de données relatives à des communications concernant au moins un usager, et comprenant les étapes suivantes :
i) analyser des données relatives à des communications entrantes et/ou sortantes d'au moins un terminal de communication d'un usager afin de déterminer des informations choisies relatives à ces communications et à chaque autre usager, dit « contact », concerné par l'une au moins de ces communications,
ii) attribuer un poids à chaque communication concernant l'usager en fonction des informations déterminées pour cette communication et d'au moins une règle choisie, et
iii) constituer un fichier de données de contacts dans lequel chaque contact est associé à un poids global qui est égal à la somme des poids attribués à chaque communication qui le concerne et qui concerne en même temps ledit usager.

Le procédé selon l'invention peut comporter d'autres caractéristiques qui peuvent être prises séparément ou en combinaison, et notamment :
- à l'étape (ii) on peut attribuer les poids en fonction d'au moins une règle qui est choisie parmi (au moins) la date de la communication, le statut de réponse à la communication, la direction de la communication, l'appartenance du contact à un répertoire de l'usager et le nombre de communications entre un contact et l'usager ;
- à l'étape (i) on peut analyser les données relatives à des communications entrantes et/ou sortantes selon une période choisie, afin de mettre à jour le fichier de données de contacts d'un usager selon cette période choisie ;
- à l'étape (iii) on peut mettre à jour dynamiquement un fichier de données de contacts en fonction des communications entrantes et/ou sortantes ;
- à l'étape (iii) on peut constituer des fichiers de données de contacts qui sont agencés sous la forme de listes de contacts ordonnés en fonction de leurs poids globaux associés ;
- à l'étape (iii) on peut constituer des fichiers de données de contacts qui sont agencés sous la forme de nuages de contacts dans lesquels les contacts d'un usager sont positionnés dans une zone de forme choisie en fonction de leurs poids globaux associés et d'un ordre alphabétique et/ou de l'ancienneté de leur dernière communication avec l'usager et/ou du statut de réponse de leur dernière communication avec l'usager et/ou de la direction de leur dernière communication avec l'usager.

D'autres caractéristiques et avantages de l'invention apparaîtront à l'examen de la description détaillée ci-après, et des dessins annexés, sur lesquels :
- la figure 1 illustre de façon très schématique et fonctionnelle un équipement de réseau équipé d'un exemple de réalisation d'un dispositif de traitement selon l'invention et connecté à un réseau de communication, et
- la figure 2 est un exemple de fenêtre d'affichage d'un nuage de contacts constitué grâce à l'invention.

Les dessins annexés pourront non seulement servir à compléter l'invention, mais aussi contribuer à sa définition, le cas échéant.

L'invention a pour objet d'offrir un procédé et un dispositif (D) associé destinés à traiter des données relatives à des communications concernant au moins un usager d'au moins un terminal de communication (T).

Dans ce qui suit, on considère à titre d'exemple non limitatif que les usagers sont équipés de terminaux de communication (T) de type non filaire, comme par exemple des téléphones mobiles (ou cellulaires) pouvant se connecter à un réseau de communication (RC) de type non filaire (mobile ou cellulaire). Mais, l'invention n'est pas limitée à ce type de terminal de communication. Elle concerne en effet tout type de terminal de communication pouvant se connecter à un réseau de communication filaire ou non filaire. Par conséquent, les terminaux de communication (T) pourront être, par exemple, des ordinateurs fixes ou portables, des téléphones fixes ou mobiles, éventuellement vidéo, ou des assistants personnels numériques communicants (ou « PDAs »).

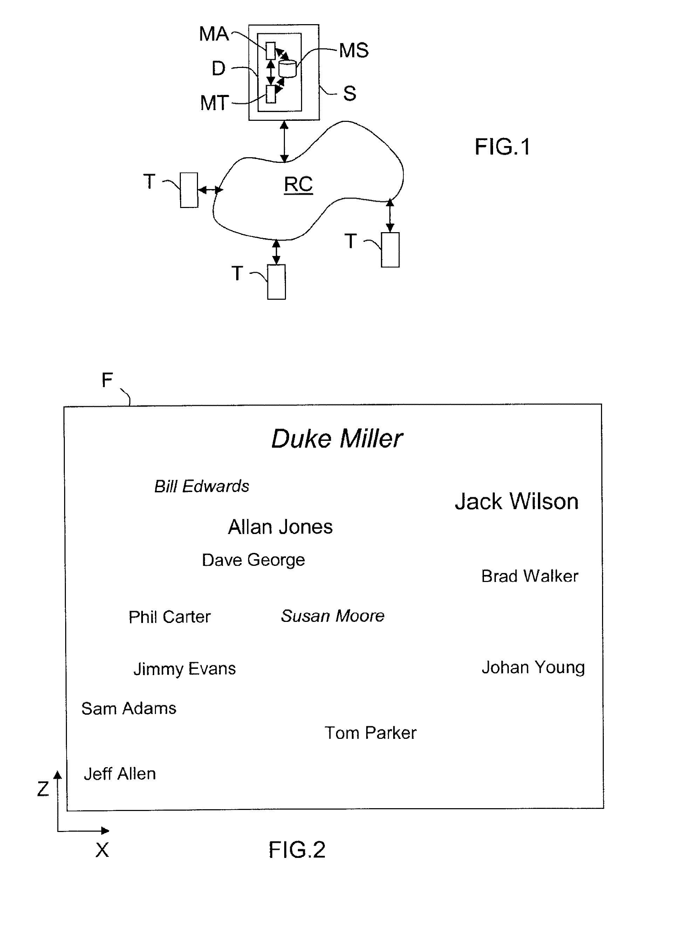

On a schématiquement représenté sur la figure 1 un exemple de réseau (de communication) RC auquel peuvent se connecter (par voie d'ondes radio) des terminaux (de communication) T, appartenant à des usagers qui sont clients (directement ou indirectement (nomades)) de l'opérateur dudit réseau RC, et qui est connecté au réseau de réseaux (ou Internet), non représenté.

L'invention propose de mettre en oeuvre un procédé de traitement de données de communications d'usagers. Ce procédé peut par exemple être mis en oeuvre au moyen d'un dispositif de traitement D selon l'invention.

On notera que dans l'exemple non limitatif illustré, le dispositif de traitement D fait partie d'un équipement de réseau, comme par exemple un serveur de services S (ici connecté au réseau RC, mais qui pourrait être couplé à l'Internet ou bien faire partie de ce dernier). Il agit donc de façon centralisée pour une multitude d'usagers. Mais, un dispositif de traitement D, selon l'invention, peut faire partie d'un terminal (de communication) T d'un usager, et dans ce cas il agit de façon distribuée pour ledit terminal T.

Par conséquent, un dispositif de traitement D, selon l'invention, peut être réalisé sous la forme de modules logiciels (ou informatiques), ou bien de circuits électroniques, ou encore d'une combinaison de circuits électroniques et de modules logiciels.

Le procédé selon l'invention comprend trois étapes principales.

Une première étape principale (i) consiste à analyser des (certaines au moins) données qui sont relatives à des communications entrantes et/ou sortantes d'au moins un terminal T d'un usager (ici choisi parmi une multiplicité ou désigné par une requête) afin de déterminer des informations choisies relatives à ces communications et à chaque autre usager, dit « contact », concerné par l'une au moins de ces communications.

Il est rappelé que l'on entend ici par « contact » un usager d'au moins un terminal T qui est associé à au moins un identifiant de communication, comme par exemple un numéro de téléphone ou une adresse de messagerie électronique ou encore une adresse Internet, qui a éventuellement (et de préférence) déjà été en communication avec un autre usager, et qui fait éventuellement partie d'un répertoire de ce dernier, personnel et/ou professionnel. Un contact peut être connu par un nom, un pseudonyme, un numéro ou un identifiant de communication.

Il est également rappelé que l'on entend ici par « communication » une liaison établie entre un terminal (de communication) d'un usager appelant et au moins un terminal (de communication) d'un usager appelé, y compris lorsque l'appelé n'a pas répondu. Par conséquent, il pourra par exemple s'agir d'un appel téléphonique classique, éventuellement via l'Internet, d'un envoi de message de type court (SMS ou MMS), d'un envoi de message de type instantané (ou « chat » ou encore IM), d'un envoi de message électronique (ou courriel), ou d'un envoi de message vidéo.

La première étape principale (i) peut par exemple être mise en oeuvre par des moyens d'analyse MA du dispositif D.

On notera qu'il n'est pas obligatoire d'analyser toutes les communications concernant un usager. En effet, seules certaines d'entre elles, choisies, peuvent être analysées. Ainsi, on peut par exemple décider de n'analyser que les communications d'un unique type, comme par exemple seulement les appels téléphoniques ou bien seulement les courriels ou encore seulement les messages instantanés (chat), éventuellement indépendamment de l'instant où ces communications se sont déroulées. On peut également décider de n'analyser que les communications établies pendant au moins un intervalle de temps choisi, éventuellement indépendamment des types respectifs des communications.

Dans le cas d'un fonctionnement centralisé, l'analyse se fait parmi les données de communication de l'usager considéré qui sont stockées dans un serveur d'appels. Ce dernier est éventuellement situé au même endroit que le serveur de services S. Il peut également et éventuellement faire partie de ce serveur de services S. Les moyens d'analyse MA du dispositif D sont donc agencés pour accéder au serveur d'appels et aux données de communication d'usagers qu'il stocke.

Dans le cas d'un fonctionnement distribué, l'analyse se fait soit localement parmi les données de communication de l'usager qui sont stockées dans le terminal T qu'il utilise, soit parmi les données de communication de l'usager qui sont stockées dans ses différents terminaux.

Les informations relatives aux communications d'un usager peuvent être des identifiants de communication de terminaux de contacts et/ou des noms ou pseudonymes de contacts et/ou des dates (et horaires) de communication et/ou des types de communication, par exemple.

On notera que les informations relatives aux communications d'un usager, déterminées par les moyens d'analyse MA, peuvent être éventuellement stockées en correspondance d'un identifiant de l'usager (éventuellement son (ou l'un de ses) identifiant(s) de communication) dans des moyens de stockage MS du dispositif D, afin qu'elles puissent être réutilisées localement à n'importe quel moment. Ces moyens de stockage MS peuvent se présenter sous n'importe quelle forme connue de l'homme de l'art, et notamment sous la forme d'une mémoire ou d'une base de données.

On notera que les moyens d'analyse MA peuvent être éventuellement agencés de manière à analyser les données relatives à des communications entrantes et/ou sortantes d'un usager donné automatiquement selon une période choisie. Dans le cas contraire, les analyses sont faites sur requête d'un terminal T d'usager ou d'un administrateur de réseau. Par exemple, la période peut être choisie égale à 24 heures (une journée) ou bien à 12 heures (une demi-journée).

Une deuxième étape principale (ii) du procédé selon l'invention consiste à attribuer un poids à chaque communication concernant un usager en fonction des informations qui ont été déterminées pour cette communication lors de la première étape (i) et d'au moins une règle choisie.

Cette deuxième étape principale (ii) peut par exemple être mise en oeuvre par des moyens de traitement MT du dispositif D, qui sont couplés aux moyens d'analyse MA et/ou aux éventuels moyens de stockage MS.

Comme indiqué ci-avant, les poids sont attribués par les moyens de traitement MT en fonction d'au moins une règle choisie par l'usager considéré ou par un administrateur de réseau, éventuellement en fonction du profil de cet usager.

Ces règles sont par exemple choisies parmi au moins :
- la date de la communication. Par exemple, on peut décider que plus la communication est récente, plus le contact est important,
- le statut de réponse à la communication (c'est-à-dire le fait que l'on ait répondu ou non à une communication entrante ou sortante). Par exemple, on peut décider qu'une communication à laquelle on n'a pas répondu est plus importante qu'une communication à laquelle on a répondu,
- la direction de la communication (c'est-à-dire le fait qu'une communication est entrante ou sortante). Par exemple, on peut décider qu'une communication sortante et/ou une communication entrante à laquelle l'usager considéré n'a pas répondu est/sont plus importante(s) qu'une communication entrante à laquelle l'usager considéré a répondu,
- l'appartenance du contact à un répertoire de l'usager (personnel et/ou professionnel). Par exemple, on peut décider qu'un contact appartenant à un répertoire d'un usager est plus important qu'un contact n'appartenant pas à un répertoire de cet usager,
- le nombre de communications entre un contact et l'usager considéré. Par exemple, on peut décider qu'un contact avec lequel un usager communique fréquemment est plus important qu'un contact avec lequel il communique rarement, voire jamais.

On notera que lorsqu'un contact fait partie d'un répertoire d'un usager stocké dans un terminal T de ce dernier ou bien dans une base de données (où sont stockés les répertoires des usagers bénéficiant du service offert par l'invention), on doit appeler ce terminal T ou bien la base de données.

Par ailleurs, on notera que lorsqu'un premier usager n'a pas eu de communication avec un second usager, ce dernier peut malgré tout être un contact du premier usager. Dans ce cas, on peut par exemple attribuer au second usager (ici un contact) un poids égal à zéro (0).

On comprendra que plus une communication est considérée comme importante, plus le poids qui lui est attribué est important.

A titre d'exemple purement illustratif on peut appliquer certaines au moins des règles complexes suivantes :
- on attribue un poids égal à 32 à chaque communication sortante effectuée dans la dernière heure écoulée et n'ayant pas fait l'objet d'une réponse,
- on attribue un poids égal à 16 à chaque communication entrante effectuée dans la dernière heure écoulée et n'ayant pas fait l'objet d'une réponse,
- on attribue un poids égal à 16 à chaque communication sortante effectuée dans la dernière heure écoulée et ayant fait l'objet d'une réponse,
- on attribue un poids égal à 8 à chaque communication entrante effectuée dans la dernière heure écoulée et ayant fait l'objet d'une réponse,
- on attribue un poids égal à 8 à chaque communication sortante effectuée dans les cinq heures ayant précédées la dernière heure écoulée,
- on attribue un poids égal à 4 à chaque communication entrante effectuée dans les cinq heures ayant précédées la dernière heure écoulée,
- on attribue un poids égal à 4 à chaque communication sortante effectuée dans les 18 heures ayant précédées les six dernières heures écoulées,
- on attribue un poids égal à 2 à chaque communication entrante effectuée dans les 18 heures ayant précédées les six dernières heures écoulées,
- on attribue un poids égal à 2 à chaque communication sortante effectuée dans les six jours ayant précédés le dernier jour écoulé,
- on attribue un poids égal à 1 à chaque autre communication concernant un contact associé à une touche de raccourci d'un terminal T d'usager ou à une liste d'amis (ou relations) de l'usager ou à un répertoire personnel de l'usager,
- on attribue un poids égal à 0 à chaque autre communication concernant un contact qui n'est ni associé à une touche de raccourci d'un terminal T d'usager, ni à une liste d'amis (ou relations) de l'usager, ni à un répertoire personnel de l'usager.

Il est important de noter que les règles utilisées peuvent éventuellement varier d'un usager à l'autre, par exemple en fonction de son profil d'usager et/ou d'un contexte pris en considération et/ou d'un choix qu'il a lui-même effectué (éventuellement en fonction de ses besoins et/ou habitudes).

Une troisième étape principale (iii) du procédé selon l'invention consiste à constituer (ou générer) un fichier de données de contacts dans lequel chaque contact est associé à un poids global qui est égal à la somme des poids qui ont été attribués à chaque communication qui le concerne et qui concerne en même temps l'usager considéré.

En d'autres termes, on prend un contact d'un usager donné, puis on détermine chaque communication concernant à la fois cet usager et ce contact et à laquelle a été attribué un poids, puis on effectue la somme des poids qui ont été respectivement attribués aux communications ainsi déterminées pour obtenir le poids global associé à ce contact.

Cette troisième étape principale (iii) peut par exemple être mise en oeuvre par les moyens de traitement MT du dispositif D.

Les fichiers de données de contacts qui sont constitués peuvent se présenter sous au moins deux formes. Ainsi, ils peuvent par exemple se présenter sous la forme de listes de contacts dans lesquelles les contacts sont ordonnés en fonction des poids globaux qui leurs ont été respectivement associés.

Dans une variante, les fichiers de données de contacts peuvent par exemple se présenter sous la forme de nuages (ou en anglais « clouds ») de contacts. Plus précisément, le nuage de contacts d'un usager donné constitue une représentation graphique choisie des contacts de cet usager. Ces contacts sont donc positionnés dans une zone de forme choisie en fonction de leurs poids globaux associés ainsi que de l'ordre alphabétique et/ou de l'ancienneté de leur dernière communication avec l'usager considéré et/ou du statut de réponse de leur dernière communication avec l'usager considéré et/ou de la direction de leur dernière communication avec l'usager considéré.

Ce mode de présentation à un usager peut par exemple être une transposition dans le domaine des télécommunications d'une application Web 2.0 appelée nuage de mots clés.

Par exemple, ils peuvent être positionnés au sein d'une zone de forme rectangulaire (éventuellement carrée). Mais, la zone peut présenter d'autres formes, géométriques ou non.

On a représenté sur la figure 2, à titre d'exemple non limitatif, une fenêtre F d'affichage d'un nuage de contacts constitué grâce à l'invention. Dans cet exemple, les contacts sont identifiés par leurs noms (ou pseudonymes). Mais cela n'est pas obligatoire. Ils pourraient en effet être identifiés par des numéros ou des identifiants de communication, par exemple, bien que cela ne facilite pas leur reconnaissance immédiate. Par ailleurs, dans cet exemple :
- l'axe horizontal X de la fenêtre F représente l'ordre alphabétique des noms des contacts, la lettre A étant la plus à gauche et la lettre Z étant la plus à droite,
- l'axe vertical Z de la fenêtre F représente l'ancienneté de la dernière communication effectuée avec un contact, la plus ancienne communication étant la plus en bas et la plus récente communication étant la plus en haut,
- la taille des noms de contact représente le poids global associé à un contact (plus la taille est importante, plus le poids global est élevé),
- les noms de contacts en italique (ou par exemple en rouge et/ou soulignés) signalent que la dernière communication effectuée avec un contact était une communication entrante n'ayant pas fait l'objet d'une réponse, de manière à faciliter la détection des contacts qu'il serait préférable de rappeler,
- les noms de contacts en italique (ou par exemple en rouge et/ou soulignés) et clignotant signalent que la dernière communication effectuée avec un contact était une communication entrante associée à une requête de rappel,
- les noms de contacts en caractère normal (non italique) et par exemple en bleu signalent que la dernière communication effectuée avec un contact était une communication sortante n'ayant pas fait l'objet d'une réponse, de manière à faciliter la détection des contacts qu'il serait préférable de rappeler,
- les noms de contacts en caractère normal (non italique) et par exemple en noir signalent que la dernière communication effectuée avec un contact était une communication sortante ou entrante ayant fait l'objet d'une réponse.

Bien entendu, certains des critères précités d'affichage d'un nuage de contacts peuvent ne pas être utilisés et/ou d'autres critères d'affichage peuvent être utilisés. Ainsi, on peut par exemple envisager de ne pas tenir compte de l'ancienneté de la dernière communication effectuée avec un contact. D'une manière générale, on peut envisager que l'usager choisisse la forme de présentation qui lui convient le mieux.

On notera que l'on peut envisager que le nom d'un contact que l'on affiche dans une fenêtre F, au sein d'une liste ordonnée ou d'un nuage, permette d'accéder à tout ou partie des informations connues sur ce contact, lorsqu'il est sélectionné. Ces informations sont par exemple stockées dans une base de données d'usagers non représentée mais accessible au dispositif D. Ainsi, la sélection d'un nom contenu dans une fenêtre F affichée sur l'écran d'un terminal T peut par exemple provoquer l'affichage dans une sous-fenêtre du nom du contact, de son numéro de téléphone fixe, de son numéro de téléphone mobile et de sa ou ses adresses e-mail, ainsi que d'une ou plusieurs icônes représentant le type de terminal T sur lequel on veut joindre le contact sélectionné et/ou le type de communication que l'on veut effectuer avec le contact sélectionné. La sélection d'une icône déclenche alors automatiquement l'établissement de la communication correspondante.

On notera également que les moyens de traitement MT peuvent être chargés de mettre à jour de façon dynamique le fichier de données de contacts (préexistant) d'un usager donné en fonction des communications entrantes et/ou sortantes de cet usager.

On notera également que dans le cas centralisé, l'usager doit adresser une requête au serveur S avec l'un de ses terminaux T, afin de pouvoir télécharger sur ce terminal T le fichier de données de contacts qui a été constitué spécifiquement pour lui.

L'invention ne se limite pas aux modes de réalisation de dispositif de traitement, d'équipement de réseau et de procédé de traitement décrits ci-avant, seulement à titre d'exemple, mais elle englobe toutes les variantes que pourra envisager l'homme de l'art dans le cadre des revendications ci-après.

## Revendications

1. Dispositif de traitement de données relatives à des communications concernant au moins un usager, **caractérisé en ce qu'**il comprend i) des moyens d'analyse (MA) agencés pour analyser des données relatives à des communications entrantes et/ou sortantes d'au moins un terminal de communication (T) d'un usager de manière à déterminer des informations choisies relatives auxdites communications et à chaque autre usager, dit « contact », concerné par l'une au moins desdites communications, et ii) des moyens de traitement (MT) agencés pour attribuer un poids à chaque communication concernant ledit usager en fonction desdites informations déterminées pour cette communication et d'au moins une règle choisie, puis pour constituer un fichier de données de contacts dans lequel chaque contact est associé à un poids global égal à la somme des poids attribués à chaque communication qui le concerne et qui concerne en même temps ledit usager.

2. Dispositif selon la revendication 1, **caractérisé en ce que** lesdits moyens de traitement (MT) sont agencés pour attribuer lesdits poids en fonction d'au moins une règle choisie dans un groupe comprenant au moins la date de la communication, le statut de réponse à la communication, la direction de la communication, l'appartenance du contact à un répertoire de l'usager et le nombre de communications entre un contact et ledit usager.

3. Dispositif selon l'une des revendications 1 et 2, **caractérisé en ce que** lesdits moyens d'analyse (MA) sont agencés pour analyser selon une période choisie lesdites données relatives à des communications entrantes et/ou sortantes, de sorte que lesdits moyens de traitement (MT) puissent mettre à jour ledit fichier de données de contacts d'un usager selon ladite période choisie.

4. Dispositif selon l'une des revendications 1 à 3, **caractérisé en ce que** lesdits moyens de traitement (MT) sont agencés pour mettre à jour dynamiquement un fichier de données de contacts d'un usager en fonction des communications entrantes et/ou sortantes d'un terminal (T) dudit usager.

5. Dispositif selon l'une des revendications 1 à 4, **caractérisé en ce que**
lesdits moyens de traitement (MT) sont agencés pour constituer des fichiers de données de contacts agencés sous la forme de listes de contacts ordonnés en fonction de leurs poids globaux associés.

6. Dispositif selon l'une des revendications 1 à 4, **caractérisé en ce que** lesdits moyens de traitement (MT) sont agencés pour constituer des fichiers de données de contacts agencés sous la forme de nuages de contacts dans lesquels lesdits contacts d'un usager sont positionnés dans une zone de forme choisie en fonction de leurs poids globaux associés et d'un ordre alphabétique et/ou de l'ancienneté de leur dernière communication avec ledit usager et/ou du statut de réponse de leur dernière communication avec ledit usager et/ou de la direction de leur dernière communication avec ledit usager.

7. Equipement de réseau (S) propre à être connecté à un réseau de communication (RC) auquel peuvent se connecter des terminaux de communication (T) d'usagers, **caractérisé en ce qu'**il comprend un dispositif de traitement (D) selon l'une des revendications précédentes.

8. Terminal de communication (T) d'usager propre à se connecter à un réseau de communication (RC), **caractérisé en ce qu'**il comprend un dispositif de traitement (D) selon l'une des revendications 1 à 6.

9. Procédé de traitement de données relatives à des communications concernant au moins un usager, **caractérisé en ce qu'**il comprend les étapes suivantes : i) analyser des données relatives à des communications entrantes et/ou sortantes d'au moins un terminal de communication (T) d'un usager de manière à déterminer des informations choisies relatives auxdites communications et à chaque autre usager, dit « contact », concerné par l'une au moins desdites communications, ii) attribuer un poids à chaque communication concernant ledit usager en fonction desdites informations déterminées pour cette communication et d'au moins une règle choisie, et iii) constituer un fichier de données de contacts dans lequel chaque contact est associé à un poids global égal à la somme des poids attribués à chaque communication qui le concerne et qui concerne en même temps ledit usager.

10. Procédé selon la revendication 9, **caractérisé en ce qu'**à l'étape (ii) on attribue les poids en fonction d'au moins une règle choisie dans un groupe comprenant au moins la date de la communication, le statut de réponse à la communication, la direction de la communication, l'appartenance du contact à un répertoire de l'usager et le nombre de communications entre un contact et ledit usager.

11. Procédé selon l'une des revendications 9 et 10, **caractérisé en ce qu'**à l'étape (i) on analyse lesdites données relatives à des communications entrantes et/ou sortantes selon une période choisie, afin de mettre à jour ledit fichier de données de contacts d'un usager selon ladite période choisie.

12. Procédé selon l'une des revendications 9 à 11, **caractérisé en ce qu'**à l'étape (iii) on met à jour dynamiquement un fichier de données de contacts d'un usager en fonction des communications entrantes et/ou sortantes d'un terminal (T) dudit usager.

13. Procédé selon l'une des revendications 9 à 12, **caractérisé en ce qu'**à l'étape (iii) on constitue des fichiers de données de contacts agencés sous la forme de listes de contacts ordonnés en fonction de leurs poids globaux associés.

14. Procédé selon l'une des revendications 9 à 12, **caractérisé en ce qu'**à l'étape (iii) on constitue des fichiers de données de contacts agencés sous la forme de nuages de contacts dans lesquels lesdits contacts d'un usager sont positionnés dans une zone de forme choisie en fonction de leurs poids globaux associés et d'un ordre alphabétique et/ou de l'ancienneté de leur dernière communication avec ledit usager et/ou du statut de réponse de leur dernière communication avec ledit usager et/ou de la direction de leur dernière communication avec ledit usager.
